# EUROPÄISCHE PATENTSCHRIFT

(11) **EP 1 791 747 B1**
(45) Veröffentlichungstag und Bekanntmachung des Hinweises auf die Patenterteilung: **09.07.2008**
(21) Anmeldenummer: 05776501.8
(22) Anmeldetag: 25.08.2005
(51) Int. Cl.: B61G 11/06, B60R 19/34

(54) **KNAUTSCHELEMENT MIT FÜHRUNGSMECHANISMUS**
CRUMPLE ELEMENT COMPRISING A GUIDING MECHANISM
ELEMENT DEFORMABLE COMPRENANT UN MECANISME DE GUIDAGE

(30) Priorität: 03.09.2004 AT 14862004; 14.03.2005 AT 4292005
(43) Veröffentlichungstag der Anmeldung: 06.06.2007
(73) Patentinhaber: Siemens Transportation Systems GmbH & Co KG, 1110 Wien (AT)
(72) Erfinder: SEITZBERGER, Markus, 1230 Wien (AT); PAYER, Hans-Jörg, A-3504 Krems-Stein (AT); RITTENSCHOBER, Andreas, A-1200 Wien (AT); GRAF, Richard, A-1140 Wien (AT)
(74) Vertreter: Peham, Alois
(86) Internationale Anmeldenummer: PCT/AT2005/000342
(87) Internationale Veröffentlichungsnummer: WO 2006/024059

(56) Entgegenhaltungen:
- WO-A-01/60675
- WO-A-01/60676
- DE-B- 1 279 709
- FR-A1- 2 775 240

## Beschreibung

Gegenstand der Erfindung ist eine Verbesserung für Knautschelemente für Fahrzeuge, insbesondere Schienenfahrzeuge, mit einem zwischen zwei Abschlussplatten angeordneten Profilteil in Form eines röhrenförmigen Kastens, insbesondere mit Polygonquerschnitt, zum Dissipieren von Stoßenergie im Falle einer Längsstauchung durch plastische Verformung, und mit einem parallel zur Längsrichtung des Profilteils angeordneten Führungselement, das mit der dem Fahrzeug abgewandten Abschlussplatte fest verbunden ist und durch eine Durchgangsöffnung in der dem Fahrzeug zugewandten Abschlussplatte durchschiebbar ist.

Knautschelemente dieser Art, englisch 'crumple elements' oder im Jargon auch Crash-Elemente ('crash elements') genannt, werden unter Anderem im Fahrzeugbau (Schienenfahrzeugbau, Kfz-Bau, etc.) zum kontrollierten Energieabbau bei Kollisionen eingesetzt. Sie sind bekannte Komponenten in Knautschzonen von Fahrzeugen, wobei Schienenfahrzeuge bei der hier beschriebenen Erfindung von besonderem Interesse sind, aber auch Kraftwagen (z.B. PKWs) od.dgl. in Frage kommen.

Aus wirtschaftlichen und sicherheitstechnischen Gründen sind bei einem Schienenfahrzeug im Bereich der längsseitig gelegenen Enden üblicherweise Knautschzonen vorgesehen. Zum einen können dadurch bei einem Unfall Beschädigungen des Fahrzeuges vermieden oder verringert werden, zum anderen kann dadurch die Sicherheit der Fahrzeuginsassen erhöht werden. Die am häufigsten unmittelbar an Unfällen beteiligten Teile eines Schienenfahrzeuges sind der vordere und der hintere Wagenendbereich, da die meisten Unfälle Auffahrunfälle zwischen zwei Zügen bzw. frontale Zusammenstöße mit anderen Verkehrsteilnehmern oder Hindernissen sind (im Fall eines Zugverbandes, der aus mehreren gekoppelten Waggons besteht, kann es bei einem Unfall auch zu einem Auffahren einzelner Waggons untereinander kommen).

Zum Schutz eines Schienenfahrzeugs sind daher gemäß dem Stand der Technik in die vordere und zumeist auch in die hintere Fahrzeugfront röhrenförmige Knautschelemente eingebaut, die bei genügend starker Krafteinwirkung zusammengestaucht und gefaltet werden können. Durch diese Maßnahme wird ein Teil der kinetischen Energie, die auf das Fahrzeug wirkt, für die Deformation des Knautschelementes aufgewendet. Infolge der Reduktion der kinetischen Energie verringert sich auch die Belastung, die auf das restliche Schienenfahrzeug wirkt, sodass die Passagierbereiche geschützt werden.

In einem Knautschelement der hier betrachteten Art wird das progressive plastische Beulverhalten von axial gestauchten Profilen zur Energiedissipation bei einer Kollision ("Crash") genutzt. Knautschelemente dieser Art sind beispielsweise in der WO 01/60675, der WO01/60676 und der US 4,492,291 beschrieben, in denen durch zusätzliche Formgebungsmerkmale wie Löcher oder Einknickungen ein gewünschter Faltvorgang bei der Kompression eingeleitet wird.

Zur Optimierung des Knautschprozesses können die Querschnitte der Knautschelemente auch mehrzellig ausgeführt sein bzw. aus mehreren Komponenten bestehen. Diese Maßnahmen dienen im Allgemeinen dazu, die Materialausnutzung im Hinblick auf möglichst hohe Energieaufnahme zu optimieren, das Stauchkraftniveau bei gegebenem Bauraum zu erhöhen bzw. durch kleinwelligeres Beulen der Profilwände ein gleichmäßigeres Stauchkraftverhalten zu erhalten.

So besteht eine "Crash-Box" gemäß der EP 1398 224 A1 aus einem Hohlteil und einem Innenteil, der verschieblich in dem Hohlteil angebracht ist und sich gegen die Innenfläche des äußeren Hohlteils erstreckende Arme zur Kompressionsreduktion aufweist, wobei die Enden der Arme mit einem bis zur Innenfläche des Hohlteils reichenden dehnbaren Material, z.B. einem Hartschaum ausgeführt sind. Die Arme dienen der Versteifung der Crash-Box und werden beim axialen Stauchprozess ebenfalls plastisch deformiert. Zur gezielten Auslegung der Crash-Box mit mehreren Laststufen bzw. zur Beul-Initiierung kann der Innenteil auch kürzer ausgeführt sein als das äußere Crash-Profil.

Weitere Möglichkeiten der Optimierung von axial gestauchten Crash-Boxen sind zum Beispiel vollständiges oder partielles Füllen von Profilen mit Schaumwerkstoffen (PU-Schaum, Aluminium-Schaum, und Ähnliche), Verwendung von mehrzelligen Profilen, etc.

Bei kleinen Querschnittsabmessungen und nicht oder nur unzureichend vorhandener seitlicher Führung (z.B. bei nicht in die Wagenkastenstruktur integrierten, sondern an den Wagenenden angebrachten "freistehenden" Knautsch-Elementen) reagieren diese Elemente jedoch empfindlich auf exzentrische Lasteinleitungen, was zu seitlichem Ausweichen oder globalem Knicken des Profils mit deutlich verringertem Energieverzehr führen kann. Außerdem besteht durch ein Verdrehen der Abschlussplatten eine Tendenz zum "Aufreiten" oder seitlichen Abgleiten der Kollisionspartner.

Bei Einsatz von seitlichen Standard-Puffern werden an den Pufferträgern zur Aufnahme übergroßer Pufferstöße häufig hinter den Pufferelementen zusätzliche Deformationskörper angeordnet, um Energie durch plastische Deformation abzubauen. Bedingt durch die vorhandene Baulänge des Puffers ist es bei einer solchen Bauweise möglich, dass die Deformationselemente vollständig in einer Führungshülse, einem Nischenkasten oder Ähnlichem kolbenförmig geführt und damit während des gesamten Stauchvogangs gegen Querverschiebungen abgestützt werden können.

Die DE 17 43 253 U1 beschreibt ein hohlzylinderfömiges Verformungsglied als Teil eines Pufferträgers, mit einer Bodenplatte und mit einer Stoßplatte, die in einer Führungshülse geführt ist. Die Führungshülse verhindert ein seitliches Ausweichen der Stoßplatte, nicht jedoch ein Knicken des Verformungsglieds oder Verdrehen der Stoßplatte.

Die DE 12 79 709 B beschreibt einen Puffer mit nachgeschaltetem Deformationskörper aus mehreren zur Längsachse parallelen Rohrstücken und mit einer zusätzlichen Längsführung des Puffers in Form eines Führungskolbens, der an der pufferseitigen (d.h. vorderen) Endplatte starr befestigt und in einem Führungsrohr hinter dem Deformationskörper geführt ist. Auch dieser Deformationskörper ist in einem Nischenkasten geführt. Der Führungskolben der Längsführung ist nicht berührungsfrei im Führungsrohr gelagert, um bei einer exzentrischen Kollision in Zusammenwirken mit der. Führung im Nischenkasten am Puffer auftretende Drehmomente ableiten zu können. Dieser Ansatz ist folglich nur für in einem Gehäuse (Nischenkasten) untergebrachte Deformationskörper gangbar.

Ein ähnliches Konzept beschreibt die DE 297 22 844 U1, nämlich eine Stoßverzehrvorrichtung mit Zentriereinrichtung und Verformungsrohr, in dessen Inneren sich ein Spannelement befindet, mit welchem die Vorspannkraft und damit die Auslösekraft des Verformrohres beeinflusst werden kann. Durch das Spannelement können beim Stauchvorgang Verdrehungen der Stoßplatte reduziert bzw. verhindert werden. Eine Führung der Stoßplatte gegen Querverschiebungen ist bei dieser Erfindung aber ebenfalls über Zusatzkonstruktionen sicherzustellen, erfordert damit auch einen Nischenkasten, eine Führungshülse, oder Ähnliches.

Bei freistehenden Knautsch-Elementen ohne vorgeschaltete Standardpuffer, wie sie z.B. in Schienenfahrzeugen mit Mittelpufferkupplungen bzw. in Verbindung mit Aufreitschutzvorrichtungen eingesetzt werden, treffen die dem Fahrzeug abgewandten Stoßplatten, die häufig als gerippte Anticlimber-Platten ausgeführt sind, direkt aufeinander. Die Deformationselemente sind dabei üblicherweise direkt hinter der Anticlimberplatte angeordnet und damit ist eine Führung in Nischenkästen oder Ähnlichem prinzipbedingt nur eingeschränkt möglich, da damit die mögliche Stauchlänge des Deformationselementes nicht vollständig ausgenutzt werden könnte.

Bekannte Lösungen zur Sicherung der vorgesehenen axialen Stauchung solcher freistehenden Knautschprofile auch bei exzentrischen Belastungen sind zusätzliche Konstruktionen zur Übernahme von Querkräften und Biegemomenten, sowie eine Teleskop-Anordnung mit genau aufeinander abgestimmten, ineinander gleitenden Röhren. Beides verringert aber im Allgemeinen den für die Energiedissipation nutzbaren Stauchweg; außerdem sind sie mit einem aufwändigen Design verbunden.

Bei einer axialen Gleitführung, z.B. im Rahmen einer Teleskopanordnung, treten bei nicht zentrischer Lasteinleitung an den Abstützungspunkten zusätzlich im Allgemeinen lokal sehr hohe Klemmkräfte auf, die einerseits eine steife Anschlusskonstruktion bedingen und andererseits auch hohe zusätzliche Gleitreibungskräfte in Stossrichtung bewirken, die sich unter Umständen negativ auf das Kollisionsverhalten der Fahrzeuge auswirken können.

Andere Lösungsansätze verwenden großflächige Crashbereiche, was nur möglich ist, wenn ein entsprechendes Einbauvolumen zur Verfügung steht, oder eine spezielle Geometrie der Crashelemente, wie eine konische Anordnung oder Querschottbleche im Inneren des Crashprofils zur Stabilisierung des Faltvorgangs. Letztere eignen sich allerdings nur für nicht allzu großen Versatz zwischen den Kollisionspartnern, und bewirken keine starke Behinderung der Verdrehung der Kontaktflächen (dadurch bleibt eine mögliche negative Tendenz zum Aufreiten oder seitlichen Abgleiten erhalten).

Es ist daher Aufgabe der Erfindung, ein röhrenförmiges freistehendes Knautschelement so zu verbessern, dass auch im Fall einer exzentrischen Kollision ein axiales Stauchen der Knautschkomponenten sichergestellt ist, und hierbei die Nachteile bekannter Lösungen überwunden werden.

Diese Aufgabe wird ausgehend von einem Knautschelement mit einem zwischen zwei Abschlussplatten angeordneten Profilteil in Form eines röhrenförmigen Kastens (insbesondere mit Polygonquerschnitt) und mit einem parallel zum Knautschprofil angeordneten Führungselement, welches mit der vorderen (d.h. dem Kollisionspartner zugewandten) Abschlussplatte des Knautschprofils fest verbunden ist und durch eine Durchgangsöffnung in der hinteren (d.h. dem Fahrzeug selbst zugewandten) Abschlussplatte durchschiebbar ist, dadurch gelöst, dass die Formgebung der Durchgangsöffnung ein berührungsfreies Durchschieben des Führungselements in Längsrichtung und eine seitliche Neigung des Führungselements gegen die Längsrichtung zulässt. Besonders vorteilhaft ist es, wenn das Führungselement im Inneren des Knautschprofils angeordnet ist.

Durch die erfindungsgemäße Lösung wird auf einfache Weise ein unerwünschtes seitliches Ausweichen (insbesondere Knicken) des Profilteils bzw. des ganzen Knautschelements vermieden. Durch ein Hinzufügen des Führungselements im Inneren des Knautschprofils ergibt sich keine Änderung der wirksamen Abmessungen des gesamten Knautschelements. Außerdem wird durch das Vorhandensein des Führungselements die maximale Stauchlänge des Profilteils nicht reduziert.

Es sei hierbei angemerkt, dass die oben getroffene Beschreibung des Führungselements und der Durchgangsöffnung sich selbstverständlich auf die Lagebeziehung der Komponenten zueinander im undeformierten Zustand bezieht; es ist nämlich damit zu rechnen (bzw. vorgesehen), dass während eines Knautschvorgangs, gerade bei dezentralem Zusammenstoß, das Führungselement mit der Abschlussplatte in der Durchgangsöffnung in (gleitenden) Kontakt kommt.

Um ein Verschieben des Führungselements ohne Beeinträchtigung des Stauchverhaltens des Profilteils zu erreichen, ist es ratsam, dass die Formgebung der Querschnitte der beiden Komponenten so abgestimmt ist, dass die Faltenbildung des Profilteils durch das Führungselement nicht behindert wird. Dies wird insbesondere dadurch erreicht, dass der Querschnitt des Führungselements jene Bereiche ausspart, in denen die plastische Verformung des Profilteils vorgesehen ist.

Ebenso ist es günstig, wenn das Führungselement in Bezug auf die Durchgangsöffnung fluchtet. Insbesondere kann das Führungselement im undeformierten Zustand des Knautschprofils berührungsfrei durch die Durchgangsöffnung hindurch oder in sie hinein ragen.

Die Ausführung des Führungselements als Kreuzprofil ermöglicht einen exzentrischen Versatz der Belastung in beide Querrichtungen. Die Funktionsweise des Führungsmechanismus ist aber auch bei anderen Querschnittsformen für das Führungsprofil (Kreiszylinder, Rechteckprofil, Quadratprofil, H-Profil, etc.) gegeben.

Die Erfindung eignet sich besonders zur Anwendung in einem Fahrzeug, insbesondere Schienenfahrzeug, mit zumindest einem erfindungsgemäßen Knautschelement, welches im Bereich einer fahrzeugendseitig gelegenen Knautschzone angeordnet ist.

Als besonders vorteilhaft hat es sich herausgestellt, wenn das Schienenfahrzeug zumindest zwei Knautschelemente mit unterschiedlicher Festigkeit (bzw. unterschiedlichem Knautschkraft-Niveau) aufweist, die vorzugsweise in Fahrzeugquerrichtung voneinander beabstandet sind.

Die Erfindung samt weiteren Vorzügen ist im Folgenden anhand eines nicht einschränkenden Ausführungsbeispiels näher erläutert, das in den beigefügten Zeichnungen dargestellt ist. Die Zeichnungen zeigen:
- Fig.1: ein Knautschelement gemäß dem Ausführungsbeispiel;
- Fig. 2: die Komponenten des Knautschelements in einer Explosionsansicht;
- Fig. 3: verschiedene Stadien der Stauchung zweier identischer Knautschelemente bei einem Zusammenstoß mit konstantem Höhenversatz;
- Fig. 4: verschiedene Stadien der Stauchung zweier identischer Knautschelemente ohne Führungselement bei einem Zusammenstoß mit konstantem Höhenversatz;
- Fig. 5: die Anbringung der Knautschelemente an einem Schienenfahrzeug;
- Fig. 6: eine Draufsicht auf den Bereich V in Fig. 5;
- Fig. 7-9: je einen Schnitt entlang der Linie A-A in Fig. 6 in unterschiedlichen Stadien der Verformung bei einer Kollision zweier Fahrzeuge mit identischen Knautschelementen mit Höhenversatz und
- Fig.10-13: je einen Schnitt entlang der Linie A-A in Fig. 6 in unterschiedlichen Stadien der Verformung bei einer Kollision zweier Fahrzeuge mit gleichartiger Anordnung der Knautschelemente mit Höhenversatz, wobei in den Fahrzeugfronten der mit einander kollidierenden Fahrzeuge je zwei Knautschelemente mit unterschiedlicher Festigkeit angeordnet sind.

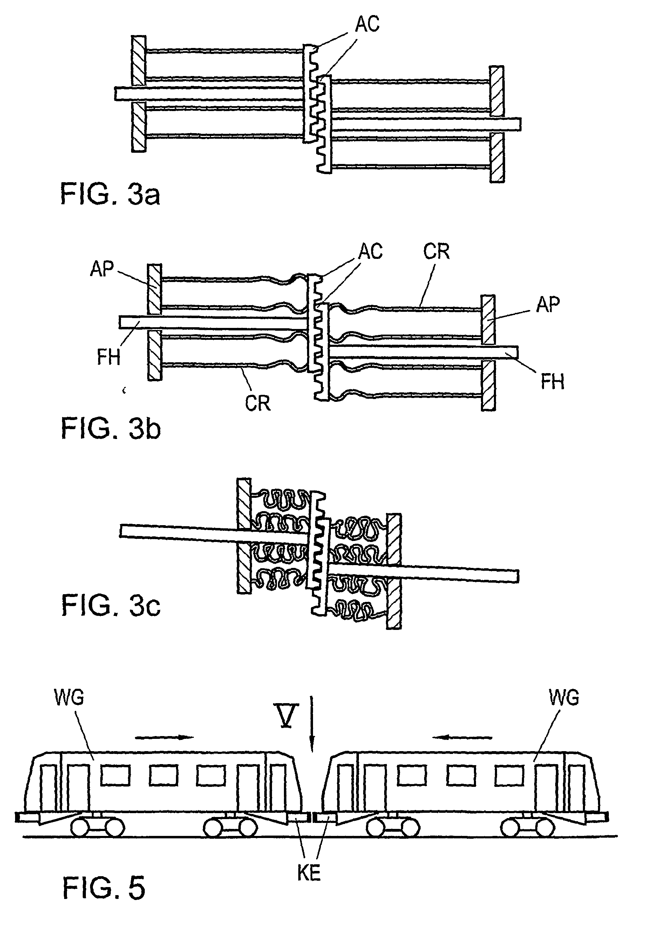

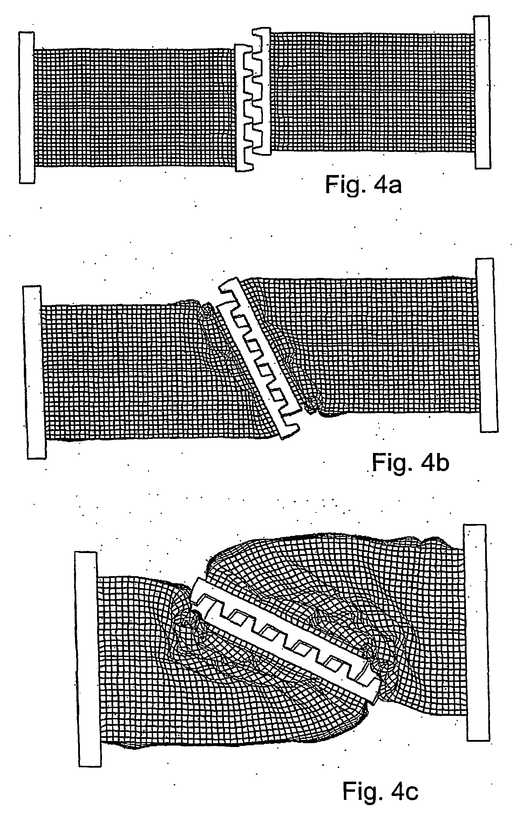

Das Ausführungsbeispiel betrifft ein Knautschelement für einen U-Bahn-Wagen. In dem konkreten Beispiel sollen die Wagenkupplungen Stöße bis zu 15 km/h Geschwindigkeitsdifferenz abfangen können, darüber hinaus sollen auswechselbare Elemente die Stoßenergie absorbieren, wofür die erfindungsgemäßen Knautschelemente zum Einsatz kommen. Diese sind, wie in Fig. 4 und 5 gezeigt, in einer Knautschzone im Endbereich des Wagens WG an geordnet (gezeigt sind beispielhaft zwei derartige Wagen WG in einer Kollisionsbewegung), und zwar am Untergestell des Wagenkastens.

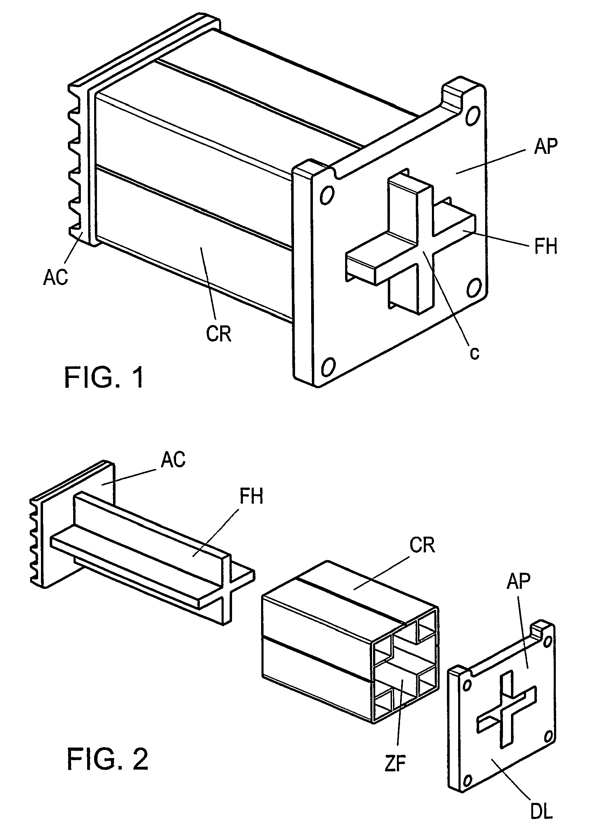

Bezug nehmend auf Fig.1 weist ein Knautschelement KE ein Profilteil CR ("Knautschprofil" oder "Crash-Profil") sowie an den Enden zwei Abschlussplatten AC, AP auf, über die die Last eingeleitet bzw. abgestützt wird. Wie aus der Explosionsdarstellung der Fig. 2 hervorgeht, hat das Crash-Profil CR eine grundsätzlich quadratische Gestalt, weist darüber hinaus einen mehrzelligen Querschnitt auf, in dem entlang den Ecken Quadratzellen verlaufen, sodass im Zentrum ein kreuzförmiger freier Bereich ZF bleibt. Die Außenmaße des Crash-Profils des Ausführungsbeispiels sind 280 x 280 x 467 mm bei einer Wandstärke von 3.9 mm.

Im Allgemeinen hat das Crash-Profil die Form eines (gegebenenfalls zusammengesetzt) rohrförmigen Kastens mit Polygonquerschnitt; so sind neben quadratischen oder rechteckigen Formen auch hexagonale oder achteckige Grundformen von besonderer Bedeutung. Sämtliche Komponenten des Knautschelements KE des Ausführungsbeispiels sind aus Aluminium gefertigt; andere Materialien, insbesondere Stahl, sind aber ebenso denkbar.

Eine Abschlussplatte AP dient als Grundplatte zur Befestigung (beispielsweise durch Anschrauben) des Knautschelements KE an den Wagenkörper. Sie ist beispielsweise 400 x 400 mm groß, mit einer Dicke von 35 mm. Die andere, dem Fahrzeug abgewandte, Abschlussplatte AC ist als Aufreitschutz-Platte ('anticlimber plate') ausgebildet, die z.B. quadratisch mit Kantenlänge 300 mm ist. Aufreitschutz-Vorrichtungen sind wohlbekannt; ihre Aufgabe ist es, ein Ausweichen eines der kollidierenden Fahrzeuge nach oben gegenüber dem anderen Fahrzeug zu verhindern. In diesem Fall sind zu diesem Zweck auf der Aufreitschutzplatte AC Rippen von 20 mm Höhe vorgesehen; die gesamte Dicke der Platte AC (einschließlich der Rippen) ist 40 mm.

Gemäß der Erfindung wird zur Übertragung der bei exzentrischer Lasteinleitung entstehenden Querkräfte und Biegemomente im Knautschelement KE ein Zusatzprofil FH im Inneren des Crashprofils CR angeordnet, welches mit der vorderen Platte AC fest verbunden ist, z.B. durch eine Schweißverbindung. Dieses Zusatzprofil FH dient als Führungselement im Sinne der Erfindung; im gezeigten Ausführungsbeispiel ist es etwas länger als das eigentliche Crashprofil CR und ragt durch ein Durchgangsloch DL in die Anschluss-Struktur, die von der Abschlussplatte AP und den tragenden Bauteilen des Wagens (Wagenkasten Untergestell) gebildet ist.

Bei nicht zentrischer Lasteinleitung sind neben der Normalkraft (in Längsrichtung des Knautschelements KE) auch Querkräfte zu übertragen, die vom plastizierenden Crash-Profil CR im Allgemeinen nur schlecht übertragen werden können. Ohne Vorkehrungen bestünde daher die Gefahr des seitlichen Ausweichens bzw. globalen Knickens des Crash-Elements. Das mit der vorderen Platte AC fest verbundene Führungsprofil FH verhindert im Zusammenspiel mit dem zweiten Knautschelement das Ausweichen der Gesamtanordnung, da sich das Führungsprofil sofort auf einer Seite des Durchgangslochs anlegt. Durch den Versatz auftretende Querkräfte können somit maßgeblich vom Führungsprofil übernommen werden. Die durch dieses einseitige Anlegen entstehenden Gleitreibungs-Kräfte sind im Vergleich zu den Längskräften des Crash-Profils im Allgemeinen von untergeordneter Bedeutung, sodass das Crash-Element KE weiterhin relativ unbeeinflusst von der Exzentrizität der Lasteinleitung in erster Linie axial gestaucht wird und die Hauptfunktion des Crash-Profils CR damit gewährleistet werden kann.

Ein eventuelles Verkanten oder Verklemmen des Führungsprofils FH bei der Anschluss-Struktur (insbesondere der Platte AP) wird verhindert, indem das Durchgangsloch DL mit großem Spiel versehen wird. Damit kommt es bei zentrischer Lasteinleitung zu keinerlei Berührung zwischen Abstützstruktur und Führungsprofil, und dieses wird beim Stauchprozess ungehindert (und ohne Kraftaufwand) nach hinten durchgeschoben, ohne den Kollaps-Prozess des Crash-Profils CR zu beeinflussen. Auch bei einer exzentrischen Belastung wird das Führungsprofil FH ohne Verkanten oder Verklemmen durchgeschoben, verhindert jedoch durch Kontakt mit der Grundplatte AP unerwünschte seitliche Abweichungen des sich stauchenden Crash-Profils CR.

Im gezeigten Ausführungsbeispiel ist das Führungsprofil FH massiv mit einer Wandstärke von 35 mm realisiert, um eine gute Eigenstabilität zu gewährleisten sowie eine zuverlässige Verschweißung des Führungsprofils FH an die vordere Platte AC zu ermöglichen. Die Kreuzform des Führungsprofils ergibt eine zuverlässige Führungsfunktion in beide Querrichtungen (horizontal und vertikal) bei geringem Material- und Fertigungsaufwand, insbesondere in Zusammenwirken mit dem hier verwendeten Crash-Profil, dessen zentraler Freiraum ebenfalls im Querschnitt kreuzförmig ist. Andere geeignete Querschnitte sind beispielsweise Kreisform, Quadrat- oder Rechteckform sowie ein gedrehtes Kreuz (Andreaskreuz, d.h. X-Form). Wenn nur eine Führung in einer Richtung ausreicht, kann auch ein Flachprofil, H-Profil oder Ähnliches verwendet werden. Bei der Auswahl eines geeigneten Querschnittes sollte (abgesehen von der zu erzielenden Führungseigenschaft des Führungselements) darauf geachtet werden, dass das Stauchverhalten des Crash-Profils nicht beeinträchtigt wird.

Fig. 3 demonstriert den Nutzen der Erfindung anhand des Ablaufs einer Stauchung bei einer Kollision mit großem Versatz, nämlich einem Versatz von 100 mm in vertikaler Richtung (bei einer Höhe des Crashprofils von 280 mm). Die gezeigten drei Bilder zeigen drei Phasen der Kollision, nämlich Fig. 3a den Ausgangszustand (Anticlimber-Platten treten gerade in Kontakt), Fig. 3b Anfang der Stauchung sowie Fig. 3c Endphase (fast vollständige Stauchung). Die Fig. 3a-3c sind das Ergebnis einer Finite-Elemente-Simulation und stellen Schnittdarstellungen entlang einer Vertikalebene entlang einer (ursprünglichen) Seite der Crash-Profile dar. Wie aus Fig. 3b ersichtlich ist, findet bereits früh im Verlauf der Kollision aufgrund der exzentrischen Beanspruchung eine Verdrehung der Anticlimber-Platten AC statt; diese Verdrehung ist aufgrund der Erfindung nur leicht, da durch das Anlegen der Führungsprofile FH bei den Durchgangslöchern in den Anschlussplatten AC eine stärkere Verdrehung verhindert wird. Auch bei weiterer Kompression wird das Crash-Profil im Wesentlichen axial gestaucht (Fig. 3c) - trotz des sehr hohen vertikalen Versatzes. Das durch den Versatz hervorgerufene Biegemoment sowie die Querkräfte werden hauptsächlich vom Führungsprofil FH aufgenommen und somit vom Crash-Profil abgeleitet. Infolge der lediglich geringen Verdrehung werden keine Aufreit-Tendenzen der Fahrzeuge hervorgerufen, die sonst auch trotz der Anticlimber-Vorrichtung der vorderen Platten AC auftreten und ein Aufreiten hervorrufen würden. Zudem wäre ohne ein erfindungsgemäßes Führungselement das Crash-Profil in der Querrichtung weggeknickt. Fig. 4a-4c zeigen beispielhaft das Versagen eines Crashelements ohne Führungsmechanismus, wie es aus dem Stand der Technik bekannt ist, anhand einer Finite-Elemente-Simulation.

Somit ergibt sich ein korrektes Funktionieren des erfindungsgemäßen Knautschelements auch bei einem großen Versatz wie in Fig. 3 gezeigt. Das Führungsprofil FH übernimmt einen wesentlichen Anteil der bei einer Kollision mit Versatz auftretenden Biegemomente und Querkräfte und verhindert zudem eine starke Verdrehung der Anticlimberplatte AC. Dadurch wird erreicht, dass das Crash-Profil CR auch bei großem Versatz im Wesentlichen axial gestaucht wird und somit seine volle Funktionsfähigkeit behält.

Die Erfindung erbringt als wesentliche Vorteile eine einfache und billige Bauweise sowie ein geringes Einbauvolumen, wobei eine leicht tauschbare Ausführung ermöglicht ist. Die Anforderungen an die Genauigkeit der Fertigung sind gering. Außerdem wird durch die erfindungsgemäße Lösung eine Verringerung der maximalen Stauchlänge des Crash-Profils CR vermieden. Zudem gestattet die Ausführung des Führungsprofils z.B. als Kreuzprofil die Ableitung von Kräften und Drehmomenten bei Versätzen in verschiedene Richtungen, nämlich in vertikaler und horizontaler Richtung.

Es sei angemerkt, dass das erfindungsgemäße Knautschelement einen gewissen Platzbedarf hinter der Grundplatte AC hat, in den das Führungselement FH im Falle einer Stauchung hineingleiten kann. Dies stellt allerdings in der Regel kein Problem dar. Gerade bei Schienenfahrzeugen, in denen die Crash-Profile in der Regel ausreichend große Bauhöhen aufweisen (Platz für Führungsprofil) und auch hinter dem Crash-Element üblicherweise Platz für das Durchrutschen vorhanden ist, ist die vorgestellte Lösung sehr vorteilhaft einzusetzen.

Das bisher beschriebene Beispiel geht von der Annahme aus, dass die beiden Anschlussplatten AP (bzw. die damit fix verbundenen Wagenkästen) keine Relativbewegungen in Querrichtung zur Stauchrichtung ausführen, d.h. der Versatz bleibt während der Kollision konstant. Falls Relativbewegungen der Fahrzeuge während der Kollision nicht zu vernachlässigen sind, ist eine zusätzliche Maßnahme zur Beschränkung von Relativbewegungen bzw. zur Übertragung von dadurch hervorgerufenen Querkräften wie im Folgenden beschrieben sinnvoll. Ohne Beschränkung der Allgemeinheit werden dabei vertikaler Versatz bzw. vertikale Relativbewegungen der Fahrzeuge zueinander angenommen.

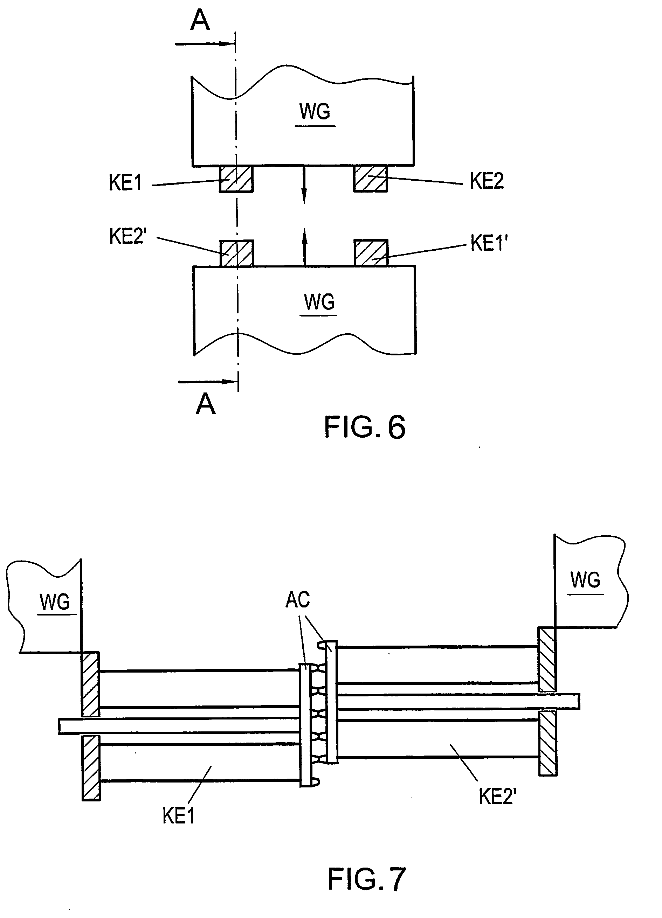

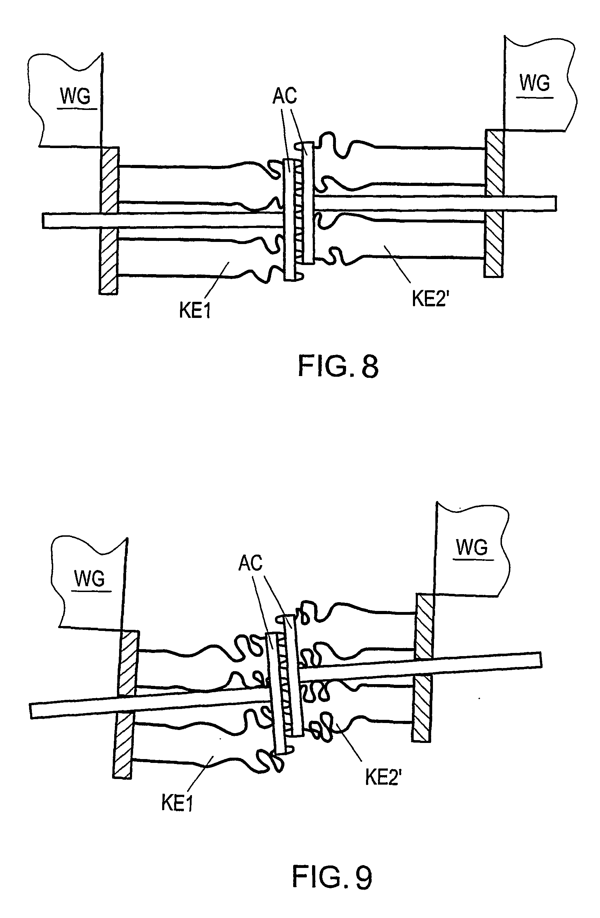

Fig. 6 zeigt die Endbereiche zweier Fahrzeuge, in dem hier dargestellten Fall Schienenfahrzeuge, mit je zwei erfindungsgemäßen Knautschelementen. Die Bezugszeichen KE1, KE2 bezeichnen die Knautschelemente des ersten der beiden Fahrzeuge und die Bezugszeichen KE1', KE2' bezeichnen die Knautschelemente des zweiten Fahrzeuges. Die beiden Knautschelemente KE1, KE2 des ersten Fahrzeuges sind in Fahrzeugquerrichtung voneinander beabstandet. Das gleiche gilt für die Knautschelemente KE1', KE2' des zweiten Fahrzeuges. Sind die Knautschelemente KE1, KE2, KE1', KE2' identisch ausgeführt (d.h. haben gleiche Festigkeit), so kann es bei einer Kollision zweier derartiger Fahrzeuge, wie in den Fig. 6-8 dargestellt, dazu kommen, dass die Vertikalbewegungen der Wagenkästen durch die Knautschelemente KE1, KE2, KE1', KE2' nicht beschränkt werden, bis es zu einem Verklemmen der Führung kommt. Wenn die Führung für die Aufnahme der i. a. sehr hohen Klemmkräfte bzw. des entstehenden Moments nicht ausgelegt ist, besteht die Gefahr von unerwünschten Schäden der Gleitführung bis hin zu einem möglichen Blockieren des Gleitmechanismus. Für die Knautschkräfte der Knautschelemente KE1, KE1', KE2, KE2', wie sie in Fig. 7-9 dargestellt sind, gilt: KE1= KE2 = KE1' = KE2'.

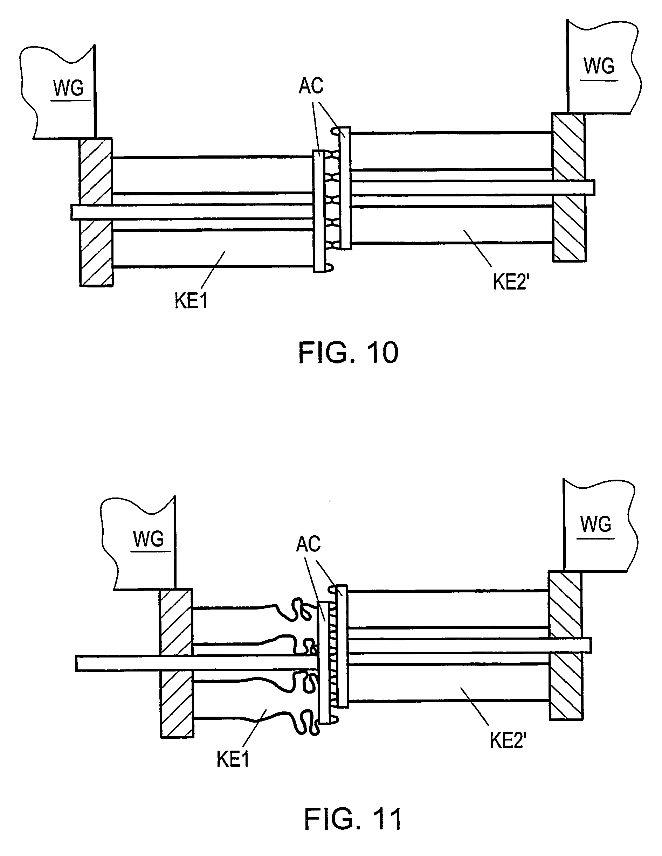

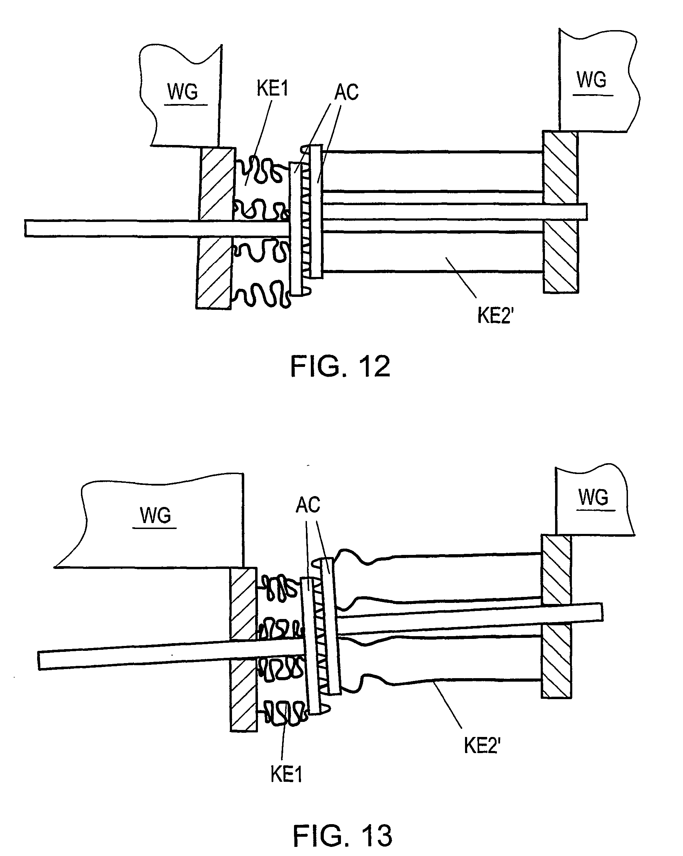

Um Relativbewegungen zweier miteinander kollidierender Fahrzeuge in vertikaler Richtung optimal zu beschränken, weist die Fahrzeugfront eines erfindungsgemäßen Fahrzeuges zwei erfindungsgemäße Knautschelemente KE1, KE2 bzw. KE1', KE2' mit unterschiedlicher Festigkeit auf. Für die Knautschkraft der Knautschelemente KE1, KE1', KE2, KE2', wie sie in Fig. 10 - 13 dargestellt sind, gilt: KE1= KE1', KE2 = KE2' und KE1<KE2, KE1'<KE2'.

Beispielsweise kann das in Fahrtrichtung gesehen linke Knautschelement KE2, KE2' des ersten bzw. zweiten Fahrzeuges eine höhere Festigkeit als das in Fahrtrichtung gesehen rechte Knautschelement KE1, KE1' des jeweiligen Fahrzeuges aufweisen.

Das höherfeste Knautschelement KE2, KE2' kann beispielsweise bei einem Kraftniveau von 750 kN stauchen, während das weniger feste Knautschelement KE1, KE1' beispielsweise ein Knautschkraftniveau von 500 kN aufweist. Stoßen nun zwei derartige baugleiche Fahrzeuge, beispielsweise zwei Schienenfahrzeugstriebwagen, zusammen, so trifft das höherfeste Knautschelement KE2 des ersten Fahrzeuges auf das weniger feste Knautschelement KE1' des zweiten Schienenfahrzeuges und das höherfeste Knautschelement KE2' auf das weniger feste Knautschelement KE1. Durch den Einsatz von Knautschelementen KE1, KE2, KE1', KE2' mit unterschiedlichem Knautschkraftniveau erfolgt das Ansprechen und die axiale Stauchung der kollidierenden Knautschelemente KE1, KE2, KE1', KE2' nicht gleichzeitig, sondern hintereinander. Hierbei übernimmt das höherfeste, zunächst nicht knautschende Knautschelement KE2, KE2' die Vertikalführung für das weniger feste und sich verformende Knautschelement KE1, KE1'. Die Vertikalkräfte im weniger festen Knautschelement KE1, KE1' werden ebenfalls maßgeblich durch den Führungsmechanismus übertragen. Erst wenn das weniger feste Knautschelement KE1, KE1' vollständig geknautscht ist, beginnt das andere Knautschelement KE2, KE2' mit höherem Lastniveau zu stauchen. Dabei übernimmt nun das erste vollständig geknautschte Knautschelement KE1, KE1' die Vertikalführung.

Das jeweils höherfeste Knautschelement KE2, KE2' verhindert ein Verdrehen der in Kontakt kommenden Rippenplatten AC. Durch diese Verdrehbehinderung kann auch das weniger feste Knautschelement KE1, KE1' keine Verdrehung ausführen. Somit sind die Vertikalbewegungen der beiden Wagenkästen miteinander gekoppelt, sodass die auftretenden Vertikalkräfte korrekt übertragen werden können. Aus den Vertikalbewegungen resultierende Vertikalkräfte werden somit optimal abgestützt und ein Aufklettern der beiden Wagenkästen wird optimal verhindert.

Durch diese sehr einfache zusätzliche Maßnahme der Anordnung von Knautschelementen KE1, KE2, KE1', KE2' unterschiedlicher Festigkeit in der Knautschzone eines Fahrzeuges kann das Crashverhalten von Fahrzeugen mit nicht integrierten Knautschelementen mit Führungsmechanismus entscheidend verbessert werden.

Diese Lösung ist geeignet, die bei der Kollision von Schienenfahrzeugen möglichen Exzentrizitäten abzudecken und Relativbewegungen zwischen den Fahrzeugen zu beschränken, und ermöglicht, bei sehr einfacher Bauweise sowohl zukünftige Crash-Anforderungen als auch Forderungen hinsichtlich Reparaturfreundlichkeit von Schienenfahrzeugen zu erfüllen.

## Patentansprüche

1. Knautschelement für ein Fahrzeug, insbesondere Schienenfahrzeug, mit einem zwischen zwei Abschlussplatten (AC, AP) angeordneten Profilteil (CR) in Form eines röhrenförmigen Kastens, insbesondere mit Polygonquerschnitt, zum Dissipieren von Stoßenergie im Falle einer Längsstauchung durch plastische Verformung, und mit einem parallel zur Längsrichtung des Profilteils (CR) angeordneten Führungselement (FH), das mit der dem Fahrzeug abgewandten Abschlussplatte (AC) fest verbunden ist und durch eine Durchgangsöffnung (DL) in der dem Fahrzeug zugewandten Abschlussplatte (AP) durchschiebbar ist,
**dadurch gekennzeichnet, dass**
die Formgebung der Durchgangsöffnung (DL) der dem Fahrzeug zugewandten Abschlussplatte (AP) ein berührungsfreies Durchschieben des Führungselements (FH) in Längsrichtung und eine seitliche Neigung des Führungselements gegen die Längsrichtung zulässt.

2. Knautschelement nach Anspruch 1, **dadurch gekennzeichnet, dass** das Führungselement (FH) innerhalb des Profilteils (CR) vorgesehen ist.

3. Knautschelement nach Anspruch 1 oder 2, **dadurch gekennzeichnet, dass** die Querschnitte des Führungselements (FH) und des Profilteils (CR) eine Formgebung aufweisen, durch die die Faltenbildung des Profilteils durch das Führungselement nicht behindert wird.

4. Knautschelement nach einem der Ansprüche 1 bis 3, **dadurch gekennzeichnet, dass** das Führungselement (FH) in Bezug auf die Durchgangsöffnung (DL) fluchtet.

5. Knautschelement nach Anspruch 4, **dadurch gekennzeichnet, dass** das Führungselement (FH) durch die Durchgangsöffnung (DL) berührungsfrei ragt.

6. Knautschelement nach einem der Ansprüche 1 bis 5, **dadurch gekennzeichnet, dass** das Führungselement (FH) einen kreuzförmigen Querschnitt aufweist.

7. Fahrzeug, insbesondere Schienenfahrzeug, mit zumindest einem Knautschelement nach einem der vorangehenden Ansprüche, welches im Bereich einer fahrzeugendseitig gelegenen Knautschzone angeordnet ist.

8. Fahrzeug, insbesondere Schienenfahrzeug, nach Anspruch 7, **dadurch gekennzeichnet, dass** es zumindest zwei Knautschelemente (KE1, KE2) unterschiedlicher Festigkeit aufweist.

9. Fahrzeug, insbesondere Schienenfahrzeug, nach Anspruch 8, **dadurch gekennzeichnet, dass** die zwei Knautschelemente (KE1, KE2) in Fahrzeugquerrichtung voneinander beabstandet sind.

## Claims

1. Crumple element for a vehicle, in particular rail vehicle, with a profile component (CR) arranged between two terminal plates (AC, AP) and realised as a tubular box, in particular with a polygonal cross-section, for the dissipation of impact energy in cases of a longitudinal collision through plastic deformation, and with a guide element (FH) arranged parallel to the longitudinal direction of the profile component (CR), and joined firmly to the terminal plate (AC) facing away from the vehicle and which can be pushed through into the terminal plate (AP) facing towards the vehicle through a passage opening (DL),
**characterised in that**
the shaping of the passage opening (DL) of the terminal plate (AP) facing towards the vehicle allows for non-contact pushing of the guide element (FH) through in the longitudinal
direction and a sideways tilting of the guide elements against the longitudinal direction.

2. Crumple element according to claim 1, **characterised in that** the guide element (FH) is arranged inside the profile component (CR).

3. Crumple element according to claim 1 or 2, **characterised in that** the cross-sections of the guide element (FH) and the profile component (CR) have a shaping by which the build-up of folds of the shape is not prevented by the guide element.

4. Crumple element according to one of the claims 1 to 3, **characterised in that** the guide element (FH) aligns in relation to the passage opening (DL).

5. Crumple element according to claim 4, **characterised in that** the guide element (FH) protrudes through the passage opening (DL) without contact.

6. Crumple element according to one of the claims 1 to 5, **characterised in that** the guide element (FH) has a cross-shaped cross-section.

7. Vehicle, in particular rail vehicle, with at least one crumple element according to one of the above claims, which is arranged in the area of a crumple zone laid on the end side of a vehicle.

8. Vehicle, in particular rail vehicle, according to claim 7, **characterised in that** it comprised at least two crumple elements (KE1, KE2) of different rigidity.

9. Vehicle, in particular rail vehicle, according to claim 8, **characterised in that** the two crumple elements (KE1, KE2) are arranged at a distance from each other in the vehicle lateral direction.

## Revendications

1. Elément déformable destiné à un véhicule, en particulier à un véhicule sur rails, comprenant une partie profilée (CR) disposée entre deux plaques terminales (AC, AP), ayant la forme d'un caisson tubulaire, notamment de section polygonale, pour la dissipation d'énergie de choc par déformation plastique dans le cas d'une compression longitudinale, et comprenant un élément de guidage (FH) disposé parallèlement à la direction longitudinale de la partie profilée (CR), fixement raccordé à la plaque terminale (AC) distante du véhicule et coulissant au travers d'une ouverture de passage (DL) dans la plaque terminale (AP) orientée vers le véhicule,
**caractérisé en ce que**
la forme de l'ouverture de passage (DL) de la plaque terminale (AP) orientée vers le véhicule permet un coulissement sans contact de l'élément de guidage (FH) en direction longitudinale et une inclinaison latérale de l'élément de guidage par rapport à la direction longitudinale.

2. Elément déformable selon la revendication 1,
**caractérisé en ce que** l'élément de guidage (FH) est prévu à l'intérieur de la partie profilée (CR).

3. Elément déformable selon la revendication 1 ou 2, **caractérisé en ce que** les sections transversales de l'élément de guidage (FH) et de la partie profilée (CR) présentent des formes n'empêchant pas le plissage de la partie profilée par l'élément de guidage.

4. Elément déformable selon l'une des revendications 1 à 3, **caractérisé en ce que** l'élément de guidage (FH) est aligné sur l'ouverture de passage (DL).

5. Elément déformable selon la revendication 4, **caractérisé en ce que** l'élément de guidage (FH) dépasse sans contact de l'ouverture de passage (DL).

6. Elément déformable selon l'une des revendications 1 à 5, **caractérisé en ce que** l'élément de guidage (FH) présente une section transversale cruciforme.

7. Véhicule, en particulier véhicule sur rails, comportant au moins un élément déformable selon l'une des revendications précédentes, disposé au niveau d'une zone déformable présentée en about de véhicule.

8. Véhicule, en particulier véhicule sur rails selon la revendication 7, **caractérisé en ce qu'**il comporte au moins deux éléments déformables (KE1, KE2) de résistances différentes.

9. Véhicule, en particulier véhicule sur rails selon la revendication 8, **caractérisé en ce que** les deux éléments déformables (KE1, KE2) sont espacés l'un de l'autre dans la direction transversale du véhicule.
